# EUROPEAN PATENT APPLICATION

(11) **EP 1 806 457 A1**
(43) Date of publication of application: **11.07.2007**
(21) Application number: 05795563.5
(22) Date of filing: 21.10.2005
(51) Int. Cl.: E03F 7/00

(54) **RETREATED PIPE AND CONDUIT FACILITY RESTORING METHOD USING THE RETREATED PIPE**

(30) Priority: 28.10.2004 JP 2004313203
(71) Applicant: SHONAN GOSEI - JUSHI SEISAKUSHO K.K., Hiratsuka-shi, Kanagawa-ken, 254-0807 (JP)
(72) Inventor: KAMIYAMA, Takao, Hiratsuka-shi, Kanagawa 2540807 (JP); KANETA, Koji, Hiratsuka-shi, Kanagawa 2540807 (JP); FUJII, Kenji, Hiratsuka-shi, Kanagawa 2540807 (JP); MIURA, Katsuyori, Hiratsuka-shi, Kanagawa 2540807 (JP); ISHIDA, Makoto, Hiratsuka-shi, Kanagawa 2540807 (JP); HASEGAWA, Takeshi, Hiratsuka-shi, Kanagawa 2540807 (JP); NAKAMURA, Yoichi, Hiratsuka-shi, Kanagawa 2540807 (JP)
(74) Representative: Kronthaler, Wolfgang N.K.
(86) International application number: PCT/JP2005/019371
(87) International publication number: WO 2006/046477

(57) **Abstract**

Integrally formed plastic segments comprising an inner surface plate constituting an inner peripheral surface and lateral plates vertically arranged on an edge part of the inner surface plate extending in a circumferential direction are coupled in a circumferential direction to assemble pipe units 10, 10'. The pipe units are coupled sequentially in the longitudinal direction of a pipe, and a rehabilitating pipe is laid down in an existing pipeline. When an existing pipe 21 is bent, the pipe units are coupled at a bending part 21b in the longitudinal direction of the pipe via coupling members so that central axes X1, X2 of the pipes are angled toward each other to create a bend. A gap formed between the pipe units at the bent part is covered by a cladding. Such a configuration enables a rehabilitating pipe to be watertight and resistant to external forces.

## Description

### Technical Field

The present invention relates to a rehabilitating pipe for repairing a pipeline installation and to a method for repairing a pipeline installation using the rehabilitating pipe. The rehabilitating pipe comprises pipe units that are coupled in sequence in a longitudinal direction of the pipe. The pipe unit is formed by connecting segments in a circumferential direction. The segment is an integrally formed plastic member comprising an inner surface plate constituting an inner peripheral surface, lateral plates vertically arranged on edges of the inner surface plate extending in a circumferential direction and end plates vertically arranged on edges extending in a longitudinal direction of the pipe.

### Background Art

Pipe lining methods have been proposed wherein, when a sewer pipe or other pipeline buried in the ground deteriorates with age, a lining is provided to an inner peripheral surface of the pipeline and the pipeline is repaired without being dug from the ground. Such methods have already been implemented in practical application.

In the above-described pipe lining method, e.g., a pipe lining material formed by impregnating a tubular resin absorbing material with an uncured thermosetting resin is inserted into the pipeline while being everted under fluid pressure. The pipe lining material is heated using any method while being pressed against an inner peripheral wall of the pipeline by the fluid pressure, and the thermosetting resin impregnated therein is cured. A plastic pipe is accordingly formed in the pipeline, and the pipeline is repaired.

A method is also known in which integrally formed plastic segments (block members) that comprise an inner surface plate constituting an inner peripheral surface and outer wall plates vertically arranged on peripheral edges of the inner surface plate are connected in a circumferential direction to assemble a pipe unit (short pipe body). The pipeline is repaired using a rehabilitating pipe formed by connecting the pipe units in the longitudinal direction of the pipe (Japanese Laid-open Patent Application Publication No. 2003-286742). This method is used for pipelines having a large opening diameter.

### Disclosure of Invention

### Problems to be Solved

In a rehabilitating pipe using segments such as that described in Japanese Laid-open Patent Application Publication, the rehabilitating pipe is assembled in a linear form using a linear connecting bolt when the pipe units are coupled in the longitudinal direction of the pipe.

Therefore, a rehabilitating pipe that extends in a linear form is laid down as a whole. However, when an existing pipe bends, a problem arises in that, since the connecting bolt is linear, adjacent pipe units or the segments constituting the pipe units will not readily be connected at the bent part. In addition, even when the pipe units can be connected, a gap forms between the segments, the pipes cannot be integrated, and water-tightness and strength against external forces cannot be ensured.

The present invention was devised in order to solve the foregoing problems, and it is an object of the present invention to provide a rehabilitating pipe and a method for repairing a pipeline installation using the rehabilitating pipe being capable of repairing an existing pipe in a watertight manner with high resistance to external forces, even when the existing pipe bends.

### Means for Solving the Problems

The present invention (claim 1) relates to a rehabilitating pipe for repairing a pipeline installation, in which integrally formed plastic segments comprised of an inner surface plate constituting an inner peripheral surface and lateral plates arranged vertically on an edge part that extends in a circumferential direction of the inner surface plate are coupled in a circumferential direction to provide a pipe unit and the pipe units are coupled sequentially in a longitudinal direction of a pipe, characterized in that the pipe units are coupled in the longitudinal direction of the pipe via a coupling member, so that central axes of each pipe unit are angled with respect to one another to create a bend and a gap between the pipe units formed at the bend is covered by a cladding.

In addition, the present invention (claim 7) relates to a method for repairing a pipeline installation that uses a rehabilitating pipe composed of integrated plastic segments having an inner surface plate constituting an inner peripheral surface and lateral plates arranged vertically on an edge part that extends in a circumferential direction of the inner surface plate. The method comprises the steps of coupling segments sequentially in a circumferential direction and assembling a pipe unit whose outer diameter is smaller than an inner diameter of a pipeline that is to be repaired; coupling pipe units in the longitudinal direction of the pipe via a coupling member so that central axes of the corresponding pipes are angled toward one another to create a bend; using a cladding to cover a gap formed at the bend between the pipe units; and laying down the rehabilitating pipe inside the pipeline while being bent.

### Effect of the Invention

According to the present invention, a rehabilitating pipe can be bent in an uncomplicated manner and the gap formed at the bent part is covered by a cladding. This allows a bent rehabilitating pipe to be watertight and resistant to external forces. Since the rehabilitating pipe can be bent and laid down, the bent part of the existing pipe can be repaired as well as endowed with water-tightness and strength.

### Brief Description of Drawings

FIG. 1 is a partially omitted, partial cross-sectional perspective view showing a framework structure of a segment;
FIG. 2 is a perspective view of a segment showing a state in which the segment of FIG. 1 is reversed with its inner surface plate upward;
FIG. 3 is a perspective view showing a state in which segments are connected in a circumferential direction;
FIG. 4 is a perpendicular cross-sectional view of two segments in which both segments connected in the circumferential direction are cut perpendicularly along the B-B line of FIG. 1;
FIG. 5 is a perspective view of a pipe unit assembled when segments are connected in the circumferential direction;
FIG. 6 is a perspective view showing a state in which pipe units are connected in a longitudinal direction of the pipe;
FIG. 7 is a perpendicular cross-sectional view of two segments obtained when the segments connected in the longitudinal direction of the pipe are cut perpendicularly along the A-A line of FIG. 1;
FIG. 8 is a horizontal cross-sectional view of an existing pipe showing a state in which a pipe unit is assembled inside an existing pipeline to provide a rehabilitating pipe;
FIG. 9 is a top view as seen from above of a segment and a coupling member when pipe units are coupled together at an incline;
FIG. 10 is a top view showing a detailed structure of the coupling member of FIG. 9;
FIG. 11A is a perspective view of a spacer of FIG. 9;
FIG. 11B is a perspective view of an corner member for use as the spacer of FIG. 9;
FIG. 12 is an illustrative view showing a state in which a pipe unit is assembled in an existing pipeline to provide a rehabilitating pipe;
FIG. 13 is a horizontal cross-sectional view that corresponds to FIG. 8 showing a state in which bent parts of a rehabilitating pipe are covered by cladding;
FIG. 14A is a top view that corresponds to FIG. 10 showing another example of a coupling member; and
FIG. 14B is a top view that corresponds to FIG. 10 showing yet another example of a coupling member.

### Key to Symbols

1 segment
10 pipe unit
20 manhole
21 existing pipeline
30 coupling member (bolt)
31 spacer
50 cladding
60, 70 connecting implement

### Best Mode of Carrying Out the Invention

The present invention allows a rehabilitating pipe that uses segments to be bent, and relates to a method for repairing a bending existing pipe or pipeline installation in a sewer pipe, tunnel, irrigation channel, or the like using the rehabilitating pipe. The present invention shall be described in detail below on the basis of embodiments and with reference to the accompanying drawings.

In the examples, the rehabilitating pipe is described as having a circular cross-sectional shape perpendicular to a longitudinal direction of the pipe. However, it is apparent that the present invention can also be applied to a rehabilitating pipe having a rectangular shape or any other shape that is not circular. In addition, the cross-sectional shape of the pipe need not be closed; the present invention can also be applied to pipes having, e.g., a horseshoe shape, a semicircular shape, a box-shape opened at a top part or another shape that is opened on one side.

### Embodiment 1

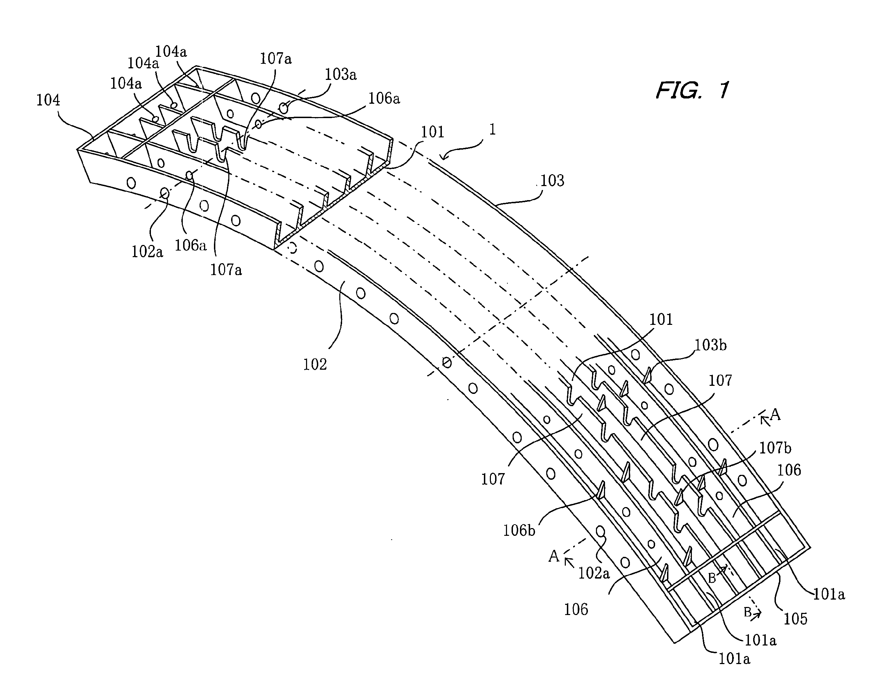

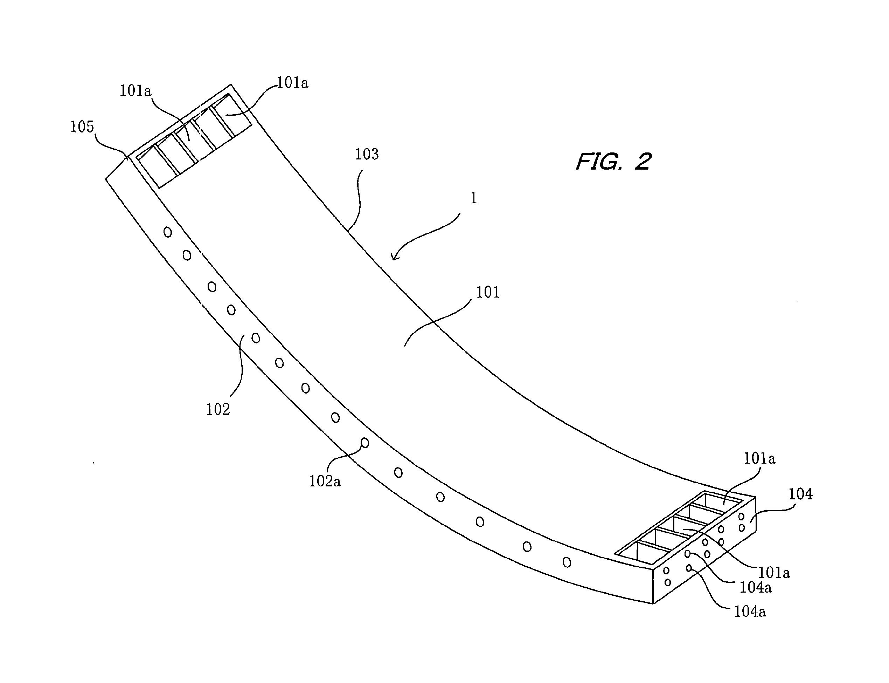

The rehabilitating pipe of the present invention is assembled and laid inside an existing pipe by connecting block-shaped segments in a circumferential direction and a longitudinal direction of the pipe. A segment 1, which is an assembling unit for the rehabilitating pipe, has an inner surface plate 101, as shown in FIG. 1 and 2. The inner surface plate 101 is formed as a plate of predetermined width that is bent into an arched shape at a predetermined angle for dividing a circumference into a plurality of equal parts; e.g., five equal parts at a 72° angle. A lower surface (an upper surface in FIG. 2) is the inner peripheral surface of the rehabilitating pipe. A circumferential direction of the arch is the circumferential direction of the rehabilitating pipe, and a width direction is the longitudinal direction of the rehabilitating pipe. A plurality of rectangular open parts 101a for performing an operation for connecting the segments 1 in the circumferential direction is provided to both end parts of the inner surface plate 101 in the circumferential direction.

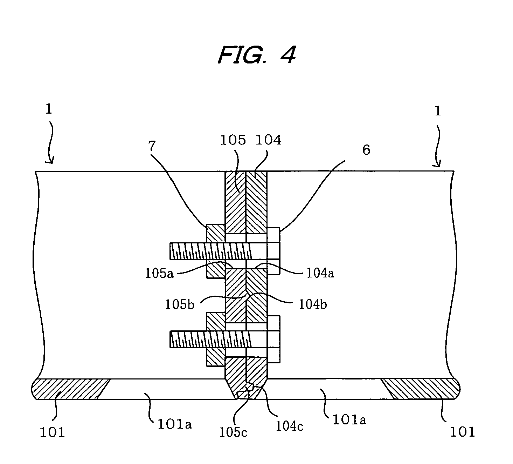

An outer wall plate that surrounds the inner surface plate 101 and encloses the inner surface plate is vertically arranged on a peripheral edge of the inner surface plate 101. The outer wall plate comprises two lateral plates 102, 103 that are of the same height and are arranged vertically on an edge part of the inner surface plate 101 along a longitudinal direction (circumferential direction). The outer wall plate further comprises two end plates 104, 105 that are of the same height as the lateral plates 102, 103 and are arranged vertically on the edge part of the inner surface plate 101 in a direction of a short edge of the inner surface plate (longitudinal direction of the pipe). A plurality of through-holes 102a, 103a (fourteen in the example) through which connecting members that will be described hereinafter are inserted in the longitudinal direction of the pipe is formed on the lateral plates 102, 103 at predetermined intervals in the circumferential direction. A plurality of through-holes 104a, 105a, through which bolts for connecting the segments 1 in the circumferential direction are inserted, is formed on the end plates 104, 105 (see also FIG. 4).

A reinforcing plate 106 and a reinforcing plate 107, which are used to reinforce the mechanical strength of the entire body of the segments 1, are vertically arranged on an upper surface of the inner surface plate 101 inside the lateral plates 102, 103. The reinforcing plate 106 is of the same height as the lateral plates 102, 103, and the reinforcing plate 107 is of a lower height than the reinforcing plate 106. A plurality of through-holes 106a and cut-out parts 107a, through which the connecting members are inserted in the longitudinal direction of the pipe, is formed on the reinforcing plates 106, 107 at positions that correspond to the through-holes 102a, 103a of the lateral plates 102, 103, respectively. A plurality of small right-triangular convex plates 103b, 106b, 107b that extend in a lateral direction (some of the convex shapes cannot be shown in FIG. 1, and therefore cannot be seen) are formed on the inner side surfaces of the lateral plates 102, 103 and both side surfaces of the reinforcing plates 106, 107, respectively, in order to prevent deformation. The right-triangular convex plates also act as a rib-structure to increase the strength of the segments 1.

The inner surface plate 101, lateral plates 102, 103, end plates 104, 105, two of the reinforcing plates 106, two of the reinforcing plates 107, and convex plates are integrally formed using a transparent, semi-transparent, or non-transparent plastic material, thus providing an arch-shaped integrated segment formed from the plastic material. Examples of materials that can be used for a transparent plastic include vinyl chloride, ABS, and DuraStar Polymer (Trade Mark). Examples of materials that can be used for a semi-transparent plastic include PVC and polyurethane. Examples of materials that can be used for a non-transparent plastic include PVC, polyester, ABS, polyethylene, and polypropylene.

The segments function as rehabilitating members or reinforcing member as desired, and are therefore not limited to an arched shape or expanding shape such as shown in FIG. 1. The segments can also have a folded shape obtained by rounding a rectangular solid or right angle that corresponds to the cross-sectional shape of the existing pipe, the size of the existing pipe, or the location on the existing pipe that is to be repaired.

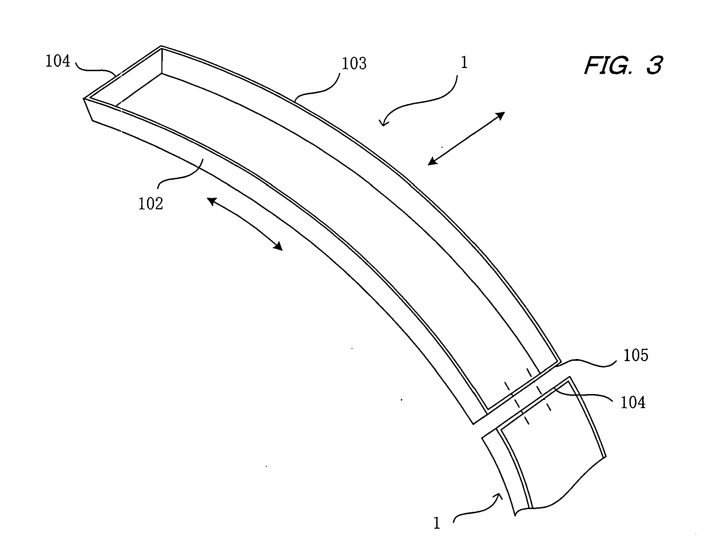

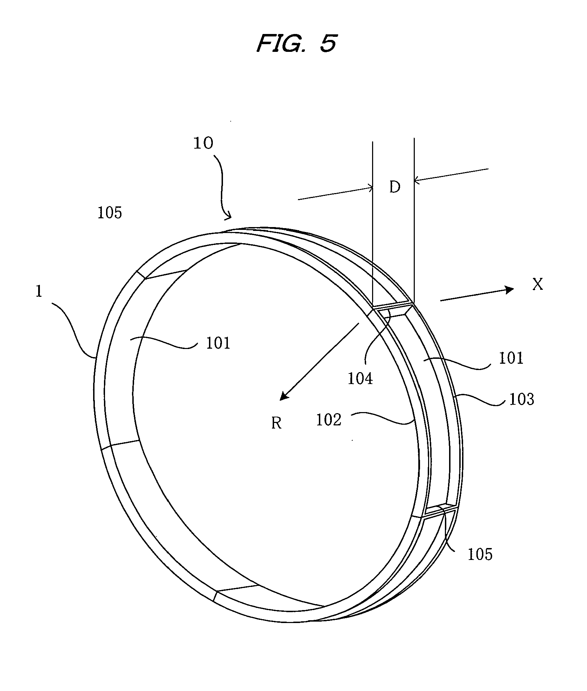

The outer side surfaces of the end plates 104, 105 of the so-configured segments 1 are brought into contact with one another, and the segments are connected in sequence and coupled in the circumferential direction so that the inner surfaces of the inner surface plates form a uniform surface, as shown in FIG. 3. A ring-shaped opened pipe unit 10 (referred to hereunder as a "pipe unit") having a predetermined short length can thereby be obtained, as shown in FIG. 5.

In FIGS. 3 and 5 and drawings corresponding thereto, the inner surface plate 101, lateral plates 102, 103, and end plates 104, 105, which are the main structural members of the segment, are shown. The reinforcing plates 106, 107 and other reinforcing structures, the connecting through-holes, and the like are omitted from the drawings so as to avoid over-complicating the drawings.

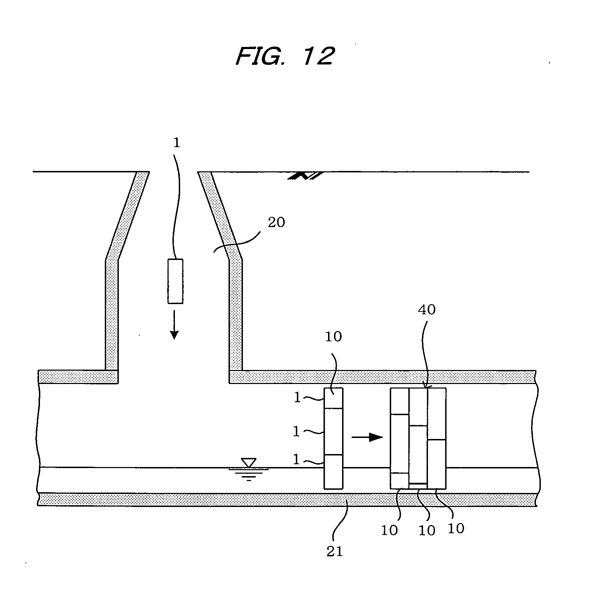

The rehabilitating pipe is laid down by inserting the segment 1 into an existing pipe 21 via a manhole 20 as shown in FIG. 12, and then connecting segments sequentially in the circumferential direction, as shown in FIGS. 3 and 4. The segments are connected in the circumferential direction by positioning the segments 1 so that inner surfaces of the inner surface plates 101 form a common surface, the outside surfaces of the lateral plates 102 form a common surface, and the outside surfaces of the lateral plates 103 form a common surface. The outside surfaces of the end plates 104 and 105 of the segments 1 are brought into contact with each other. Bolts 6 are inserted into the through-holes 104a, 105a from the open part 101a of the inner surface plate 101 and nuts 7 are screwed on to the bolts. Both end plates 104, 105 are tightened, as shown in detail in FIG. 4. In FIG. 4, a cross section of the segment on the left side shows a perpendicular cross section along the B-B line of FIG. 1, and a cross section of the segment on the right side shows a perpendicular cross section along a corresponding line in the end plate 104 of FIG. 1.

Concave parts 104b, 104c are formed across the entire length of the end plate 104 in the longitudinal direction of the pipe and convex parts 105b, 105c that fit into the concave parts are formed along the entire length of the pipe on the end part 105 in the longitudinal direction of the pipe. Therefore, when the segments are connected, both segments are readily aligned and brought into contact. A sealing material (not shown) is applied to the fitting part, whereby the water-tightness of the connecting part can be increased. Once the segments have completely been connected, the open parts 101a are sealed shut by a lid (not shown). An inner surface of the lid connects with the inner surface of the inner surface plates 101, and a uniform inner surface is formed.

The ring-shaped pipe unit 10 having a shape obtained when the circular pipe is cut into round slices at a predetermined width D perpendicular in a longitudinal direction X of the pipe can thus be assembled, as shown in FIG. 5. The segment 1 corresponds to a block-shaped member obtained when the pipe unit 10 is cut along a radial direction R and divided into a plurality of parts (preferably equal parts) in the circumferential direction. The outer diameter of the pipe unit 10 is smaller than an inner diameter of the existing pipeline that is to be repaired.

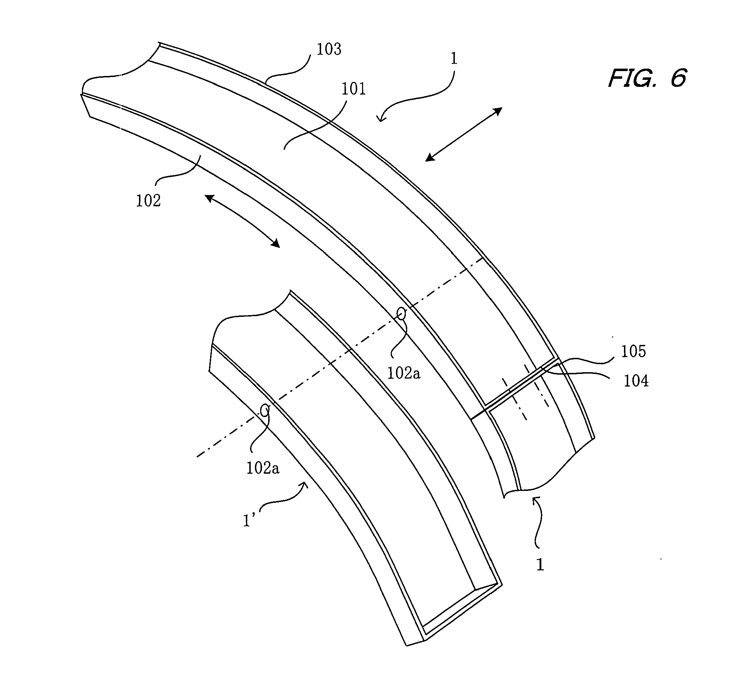

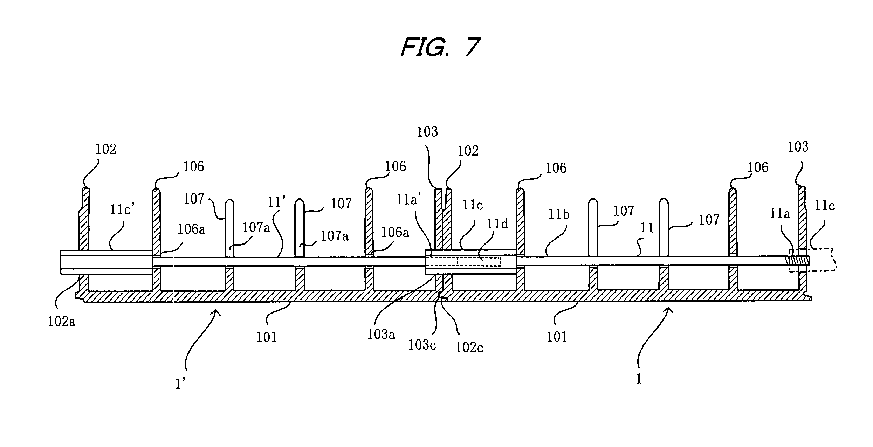

The assembled pipe unit 10 is laid down in the longitudinal direction of the pipe by connecting the segments in sequence in the longitudinal direction of the pipe, as shown in FIGS. 6 and 7. The segments are connected in the longitudinal direction using a metallic connecting member 11, one end of which being a threaded part 11a and the other end of which being a nut part 11c in which a screw hole 11d for screwing onto the threaded part 11a is formed. Both end parts are integrally coupled using a rod 11b.

Segments 1, 1' of two pipe units are shown in FIG. 7, and a cross section of the segment 1 or 1' corresponds to a perpendicular cross section along the A-A line of FIG. 1. In FIG. 7, the connecting member 11 on the right side is already coupled to the nut part 11c of another connecting member shown by the dot-dashed line, locked with the segment 1, and anchored to the segment 1. In this state, the other segment 1' is connected to this segment 1 as follows. First, both segments 1, 1' are aligned so that the inner surfaces of the inner surface plates 101 will connect and form a uniform surface, outside surfaces of the lateral plates 102 and 103 of both segments 1, 1' are brought into contact, and the nut part 11c protruding from the lateral plate 102 of the segment 1 is fitted through the through-hole 103a of the lateral plate 103 of the segment 1'. The connecting member 11' is then inserted from the through-hole 102a of the lateral plate 102 of the segment 1', and the threaded part 11a' is screwed into the screw hole 11d of the nut part 11c of the connecting member 11. Once the nut part 11c' of the connecting member 11' has been screwed on until contact is made with the reinforcing plate 106 of the segment 1', the connecting member 11' will be locked with the segment 1'. The nut part 11c' tightens the reinforcing plate 106 of the segment 1'. Therefore, the segment 1' and the connecting member 11' are securely locked together, the connecting member 11' is anchored to the segment 1', and the segments 1 and 1' are joined. The segments are connected using, e.g., four connecting members per segment. Therefore, the segments 1, 1' are securely connected in the longitudinal direction of the pipe.

Convexities 102c are formed along the entire periphery of the lateral plate 102 of the segment and concavities 103c that fit the convexities are formed along the entire periphery of the lateral plate 103. Therefore, when the segments are coupled in the longitudinal direction of the pipe, the segments are readily aligned and brought into contact, as when connected in the circumferential direction. A sealing material (not shown) is applied to the fitting parts, and the water-tightness of the connecting part is increased.

In FIG. 7, when the segment 1 is the first segment in the longitudinal direction of the pipe, a connecting member such as that shown in the drawing cannot be used. Therefore, an anchoring member having the same structure as the nut part 11c that can be anchored to the segment 1 by unspecified means is used for the connecting member.

In the above-described manner, the pipe units 10 are coupled sequentially in the longitudinal direction in the existing pipe 21, whereby a rehabilitating pipe 40 is laid down, as shown in FIG. 12.

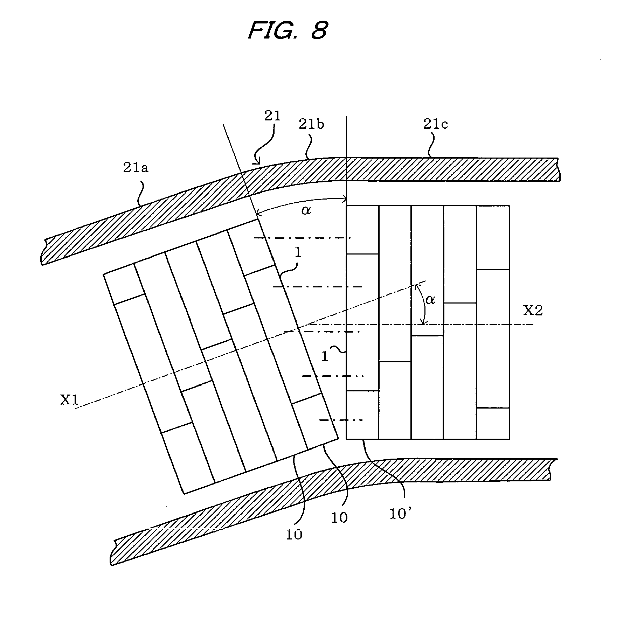

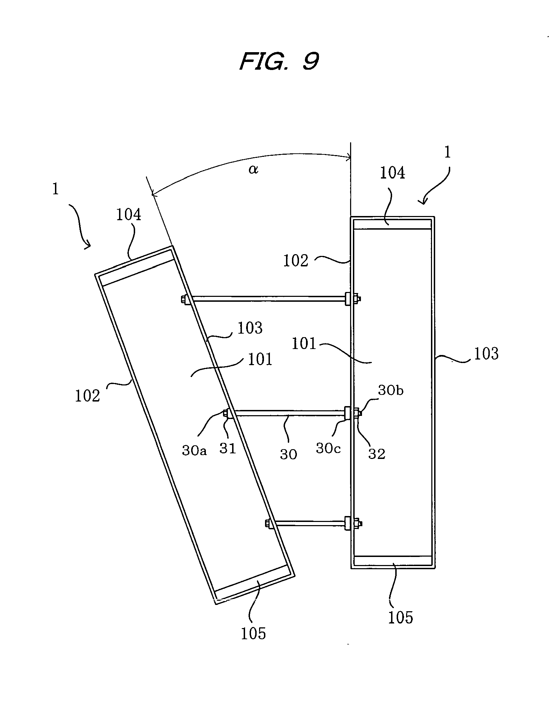

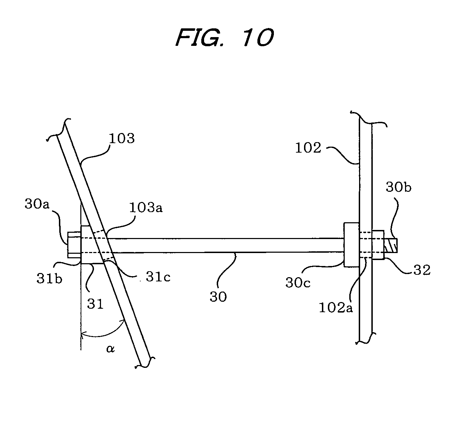

The existing pipe 21 is not necessarily limited to one extending into a linear shape, and may also be bent, as shown in FIG. 8. In such a bent existing pipe portion, the rehabilitating pipe must also bend so as to match the degree to which the existing pipe bends. The pipe units 10 are coupled in the bent part in the below-described manner via coupling members composed of bolts 30 and nuts 32, as shown in FIGS. 9 and 10.

In FIG. 8, the existing pipe 21 is shown in a horizontal cross-sectional view, and the rehabilitating pipe is shown as viewed from a top part toward a lower part. The existing pipe 21 bends from a linear portion 21a at a bent part 21b, and then becomes a linear portion 21c. The pipe units are assembled from the left in sequence towards the right. The pipe units 10 are connected in sequence in the rightward direction along the linear part 21a by the connecting member 11 so as to extend in a linear shape, and are assembled so that an axis X1 of the pipe units matches (or is offset by a predetermined amount from) an axis of the existing pipe 21 in the linear part 21a. The existing pipe 21 bends at the bent part 21b, and then becomes the linear part 21c. Therefore, an axis X2 of a next pipe unit 10' bends to incline away from the axis X1 by an angle α that corresponds to the degree to which the existing pipe bends. An angle between the surfaces of the lateral plates 102 and 103 of the segments constituting the pipe unit is also the angle α, as shown in FIG. 9.

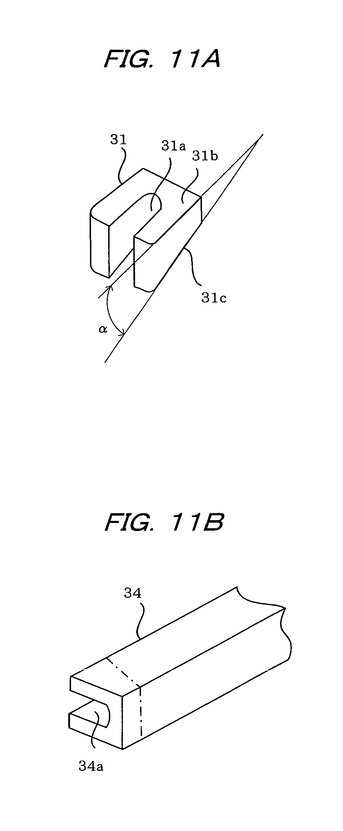

A spacer (washer) 31 shown in FIG. 11A is then used. The bolt 30 is inserted through a hole 31a of the spacer 31, the through-hole 103a formed in the lateral plate 103 of the segment 1 on the left side, and the through-hole 102a of the lateral plate 102 of the segment 1 on the right side. The nut 32 is screwed onto a threaded part 30b of the bolt 30, so that the pipe units are coupled, as shown in detail in FIG. 10. A thickness gradient of the spacer 31 is inclined in the longitudinal direction of the pipe at a value similar to the slant α of the axis of the pipe, as shown in FIG. 11A. Therefore, a surface 31c of the spacer having the gradient is matched to a surface of the lateral plate 103 of the segment, a flat surface 31b of the spacer is matched to a surface of a top part 30a of the bolt 30, and a stopper 30c anchored to the bolt comes into contact with the lateral plate 102. As a result, an angle between surfaces of the lateral plate 103 on the left side and the lateral plate 102 on the right side is adjusted to α, and the units can be coupled in a state of being separated a predetermined distance.

A squared member 34 in which a U-shaped hole 34a is formed is cut at a predetermined angle as shown by the dot-dashed line, whereby the spacer 31 can be given the desired thickness gradient, as shown in FIG. 11B. Therefore, a spacer having a gradient at an angle that corresponds to the degree to which the existing pipe bends can be prepared, and the angle α of inclination of the pipe unit can be matched to the degree to which the existing pipe bends.

Nuts and bolts are used to form such couplings at, e.g., three locations for each segment, as shown in FIG. 9. However, when necessary, couplings can also be made at more or fewer locations. Preformed holes (FIG. 1) may not be able to be used for the through-holes 102a, 103a of the lateral plates through which the bolts are inserted. Therefore, in such instances, holes are newly formed in accordance with the locations where couplings are to be made. The gap at the bent part between the coupled pipe units can be formed so that lower parts are not separated, but instead are brought near to one another until contact is nearly made, as shown in FIG. 9.

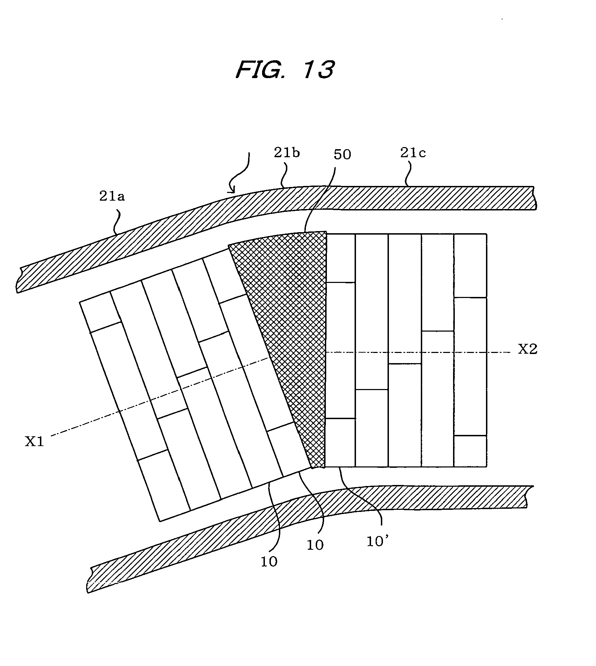

Once the pipe units are coupled in the bent part of the existing pipe, the pipe units will thus be connected in sequence in the rightward direction so as to once again extend in a linear shape in the linear portion 21c. The gap between the pipe units created at the bent part is covered by cladding 50 composed of a curing resin sheet. This state is shown in FIG. 13. Only part of the cladding 50 is shown in FIG. 13. However, the cladding is provided along an entire periphery of the pipe unit so as to cover the entire gap between the pipe units 10, 10'.

The resin sheet of the cladding is composed of a thermosetting reinforced plastic made from reinforcing fibers impregnated with a thermosetting resin and a curing agent. Examples of materials that are used for the reinforcing fibers include glass fibers, carbon fibers, metallic fibers or organic fibers, and natural fibers. The curing agent operates to use a radical to bring about a reaction with the thermosetting resin, and may be, e.g., benzoyl peroxide, lauroyl peroxide, and other organic peroxidized substances. Examples of materials that are used for the thermosetting resin include unsaturated polyester resins and epoxy (meth)acrylate resins. When the gap between pipe units is covered by the cladding 50 in the above-described manner, and a heat treatment is subsequently performed, the thermosetting resin will cure, thereby bonding the resin sheet to the pipe units, and enabling the pipe units to be integrated so as to seal the gap between the pipe units 10, 10'. The resin sheet is extremely strong and has an exceptional anti-corrosive property. Therefore, the strength and anti-corrosive property of the rehabilitating pipe at the bent part can be dramatically increased.

When the existing pipe 21 bends to a greater degree than that shown in FIG. 8, the process is not completed merely by inclining and coupling the central axis of one pipe unit; the next pipe unit must also be inclined and coupled. Using a method similar to that shown in, e.g., FIG. 10, a plurality of pipe units is then also inclined in sequence to a predetermined angle and coupled together, whereby a rehabilitating pipe that bends in accordance with an existing pipe that bends at an arbitrary angle can be laid in the existing pipe.

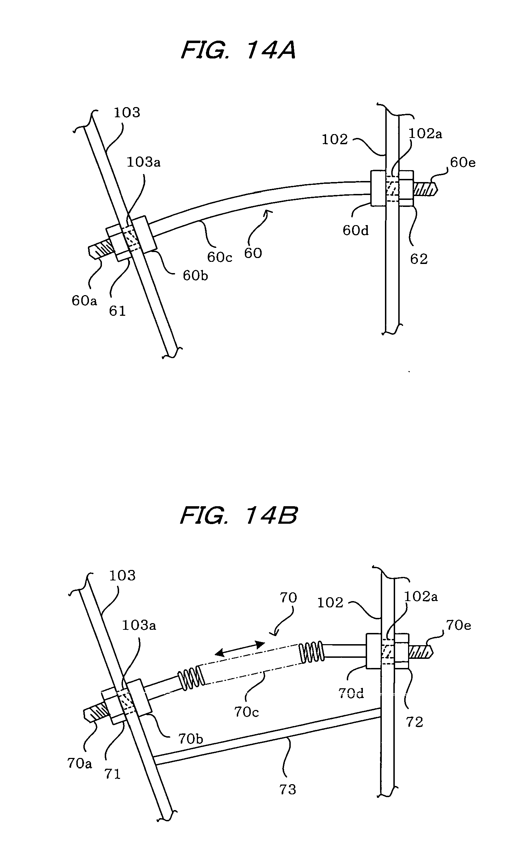

The coupling member for coupling the pipe units at an incline can be connecting implements 60, 70 shown in FIG. 14A, 14B instead of a bolt, nut, or other connecting implement.

The coupling member shown in FIG. 14A is the connecting implement 60, in which stoppers 60b, 60d are provided in a fixed state to both sides of a rod 60c composed of a bendable elastic material, and in which distal ends are threaded parts 60a, 60e. The threaded parts 60a, 60e are inserted through the through-hole 103a of the lateral plate 103 of the segment and the through-hole 102a of the lateral plate 102, threadably mounted with the nuts 61, 62, respectively, and tightened, whereby the pipe units are coupled. The rod 60c of the connecting implement can then be bent to any angle in accordance with the degree to which the existing pipe bends. Therefore, the pipe units can be connected at a predetermined angle of inclination that corresponds to the degree of bending. In addition, the stoppers 60b, 60d are provided to the connecting implement 60. Therefore, the pipe units can be coupled in a state of being separated a predetermined distance.

On the other hand, the coupling member shown in FIG. 14B is the connecting implement 70, which has an extendable spring 70c, and in which a stopper 70b and a threaded part 70a are provided to one end, and a stopper 70d and a threaded part 70e are provided to the other end. The threaded parts 70a, 70e are inserted through the through-hole 103a of the lateral plate 103 and the through-hole 102a of the lateral plate 102 of the segment. Nuts 71, 72 are screwed onto and tightened on threaded parts 70a, 70e, respectively, whereby the pipe units can be coupled. The spring 70c of the connecting implement can be bent at any angle in accordance to the degree to which the existing pipe bends and can be extended. Therefore, the pipe units can be connected at a predetermined angle of inclination that corresponds to the degree of bending. A gap-preserving holding member (spacer) 73 is interposed between the lateral plates 102, 103, whereby the pipe units can be coupled in a state of being separated a predetermined distance.

The implements 60, 70 also make couplings at about three locations for each segment. However, the types of connecting implements used can be mixed and need not be the same. For example, if three couplings are to be made for each segment, the couplings are made by using the connecting implement shown in FIG. 14A at one location, and using the connecting implement shown in FIG. 10 at the other two locations.

## Claims

1. A rehabilitating pipe for repairing a pipeline installation, in which integrally formed plastic segments comprised of an inner surface plate constituting an inner peripheral surface and lateral plates arranged vertically on an edge part that extends in a circumferential direction of the inner surface plate are coupled in a circumferential direction to provide a pipe unit and the pipe units are coupled sequentially in a longitudinal direction of a pipe, **characterized in that** the pipe units are coupled in the longitudinal direction of the pipe via a coupling member, so that central axes of each pipe unit are angled with respect to one another to create a bend and a gap between the pipe units formed at the bend is covered by a cladding.

2. A rehabilitating pipe according to claim 1, wherein the coupling member is a linear connecting implement for insertion via a through-hole formed in the lateral plate, the pipe units are coupled with other pipe units by using the connecting implement via spacers having a thickness gradient, and the pipe units are coupled in a slanted arrangement at an angle that corresponds to the thickness gradient of the spacers.

3. A rehabilitating pipe according to claim 2, wherein the angle of inclination can be changed by changing the thickness gradient of the spaces.

4. A rehabilitating pipe according to claim 1, wherein the coupling member is a bendable connecting implement for insertion via a through-hole formed in the lateral plate, and the connecting implement bends in accordance with the degree to which the pipe units bend when the pipe units are coupled in a bent state.

5. A rehabilitating pipe according to claim 1, wherein the coupling member is an extendable/contractible connecting implement for insertion via a through-hole formed in the lateral plate, and the connecting implement extends/contracts in accordance with the amount in which the pipe units bend when the pipe units are coupled in a bent state.

6. A rehabilitating pipe of any of claims 1 through 5, wherein the cladding is a resin sheet impregnated with a setting resin, and is cured after the gap between the pipe units is covered.

7. A method for repairing a pipeline installation that uses a rehabilitating pipe composed of integrated plastic segments having an inner surface plate constituting an inner peripheral surface and lateral plates arranged vertically on an edge part that extends in a circumferential direction of the inner surface plate, the method comprising the steps of:
coupling segments sequentially in a circumferential direction and assembling a pipe unit whose outer diameter is smaller than an inner diameter of a pipeline that is to be repaired;
coupling pipe units in the longitudinal direction of the pipe via a coupling member so that central axes of the corresponding pipes are angled toward one another to create a bend;
using a cladding to cover a gap formed at the bend between the pipe units; and
laying down the rehabilitating pipe inside the pipeline while being bent.

8. A method for repairing a pipeline installation according to claim 7, wherein the coupling member is a linear connecting implement for insertion via a through-hole formed in the lateral plate, the connecting implement is used to couple one pipe unit to another pipe unit via a spacer having a thickness gradient, and a pair of pipe units is coupled in a slanted arrangement at an angle that corresponds to the thickness gradient of the spacer.

9. A method for repairing a pipeline installation according to claim 7 or 8, wherein the coupling member is a bendable or extendable/contractible connecting implement for insertion via a through-hole formed in the lateral plate, and, when the pipe units are coupled in a bent state, the connecting implement bends or extends/contracts in accordance with the degree to which the pipe units bend.

10. A method for repairing a pipeline installation according to any of claims 7 through 9, wherein the cladding is a resin sheet impregnated with a setting resin, and is cured after the gap between the pipe units is covered.
